# EUROPEAN PATENT APPLICATION

(11) **EP 3 417 720 A1**
(43) Date of publication of application: **26.12.2018**
(21) Application number: 17176858.3
(22) Date of filing: 20.06.2017
(51) Int. Cl.: A23L 3/36, A23L 5/10, A47J 27/00, H05B 1/02, A47J 27/10

(54) **METHOD AND DEVICE FOR HYDRATING FOOD AND A KITCHEN APPLIANCE COMPRISING SUCH A DEVICE**

(71) Applicant: Koninklijke Philips N.V., 5656 AE Eindhoven (NL)
(72) Inventor: KUI, Xiaoyun (Shirley), 5656 AE Eindhoven (NL); WIJNOLTZ, Anna Louise, 5656 AE Eindhoven (NL); SU, Guangming (Roger), 5656 AE Eindhoven (NL); YU, Donghai (Jerry), 5656 AE Eindhoven (NL)
(74) Representative: de Haan, Poul Erik

(57) **Abstract**

The invention provides a method for hydrating food (160), comprising the steps of:
a) pressurizing air to a first value (V1) in a first closed compartment (110) containing air and the food (160) to be hydrated, the first value (V1) being lower than the value (V0) of the pressure outside the first closed compartment (110); and
b) immersing the food (160) into a liquid (190) comprising water for hydrating in the first closed compartment (110) and increasing the pressure inside the first closed compartment (110) from the first value (V1) to a second value (V2).

## Description

### FIELD OF THE INVENTION

The invention relates to a method for hydrating food, a respective device, and a kitchen appliance including such device.

### BACKGROUND OF THE INVENTION

Methods for hydrating food are known in the art, e. g. from US 2006/0251788 A1. This document describes a food product and system and method of making in which the product includes a hydrated plurality of grain or seed based constituents. In a preferred embodiment of US 2006/0251788 A1, the product can be prepared by selecting one or more grain or seed based constituents, hydrating to a desired softness, then packaging and freezing. Optionally hydration is performed under reduced-pressure conditions. Amongst others, this document describes a method of manufacturing a food composition comprising: forming constituent parts, adding liquid to the constituent parts, applying vacuum pressure to the combined constituent parts and liquid, waiting during a hydration period a sufficient period to hydrate the constituent parts, and forming a food product with the hydrated constituent parts.

### SUMMARY OF THE INVENTION

Certain foods need to be hydrated before consumption, e. g. to soften its hardness or to shorten the cooking time. Examples for such foods are dried beans, whole grain, dried sea food. Further, depending on the food it is necessary to add water, e. g. to allow or promote certain chemical reactions during cooking like hydrolysis or starch gelatinization.

In general, hydration is time consuming. It frequently needs several hours up to the necessity to hydrate the food overnight. With the steadily changing needs of consumers regarding quick cooking times and the desire to be able to prepare a meal conveniently and spontaneously, hydration time is a significant drawback.

Further, hygienic problems can be caused by long hydration times as e. g. bacteria or fungi being attached to the food might grow rendering the food.

Hence, it is an aspect of the invention to provide a method and/or a device for hydrating food which preferably at least partly obviate one or more of above-described drawbacks. The present invention may have as object to overcome or ameliorate at least one of the disadvantages of the prior art, or to provide a useful alternative.

According to the present invention a method for hydrating food is proposed, comprising the steps of: (a) pressurizing air to a first value in a first closed compartment containing air and the food to be hydrated, the first value being lower than the value of the pressure outside the first closed compartment; and (b) immersing the food into a liquid comprising water for hydrating in the first closed compartment and increasing the pressure inside the first closed compartment from the first value to a second value.

Alternatively, it is possible to separate the step of immersing the food into the liquid from the step of increasing the pressure inside the first closed compartment. In particular, it is possible to perform the immersing step before step a). Thus, an alternative approach of the method for hydrating food comprises the following steps: (A) immersing the food into a liquid comprising water for hydrating in a first closed compartment; (B) pressurizing air to a first value in a first closed compartment containing air and the food to be hydrated, the first value being lower than the value of the pressure outside the first closed compartment; and (C) increasing the pressure inside the first closed compartment from the first value to a second value.

In specific embodiments, in this case at least steps B) and C) are repeated at least once. Step A) might be executed before the (first) execution of step B) or the (first) execution of step C). This alternate approach can be combined with all options disclosed in the following for the method having steps a) and b).

According to embodiments of the present invention steps a) and b) can be repeated at least once. The invention is in particular suitable for hydrating foods like e. g. rice, in particular white rice and brown rice, beans, in particular back beans, soybeans, red beans, green beans, kidney beans, and lentils. The second value is preferably below the pressure outside the first closed compartment.

Due to steps a) and b) (or steps B) and C)) the properties of the surface and/or the outercoat of the food is changed. In particular, the permeability of the outer coat of the food, e. g. the taste of the food, for liquids, in particular, water, is increased. Due to these changes the immersion in liquid comprising water in step b) leads to a higher ingress velocity of liquid compared to the same food without executing steps a) and b) (or steps B) and C)). The execution of steps a) and b) (or steps B) and C)) is denominated as "dynamic pressure treatment" in the following.

The liquid ingress leads to a weight gain of the dried food during hydration. Comparing the weight gain obtained by the present invention to a benchmark experiment in which the same amount of food is immersed into water without a previous dynamic pressure treatment (i.e. a conventional soaking process) for a time being identical to the time in which the dynamic pressure treatment has been performed to the food it can be seen that the weight gain according to the present invention may be at least 1.5 times higher than with the conventional soaking.

Hydration according to the present invention may allow a significant weight gain already after a relatively short time of several minutes, i.e. the inclination of a function representing the weight gain over treatment time is very steep in the beginning for the food being dynamic pressure treated. For instance, the hydration of white rice according to the present invention resulted in weight gains of more than 15 wt.% [weight-%] after two minutes only with several cycles of steps a) and b) performed to the sample and more than 20 wt.% after three minutes only. A control experiment in which the same kind of rice was soaked in water for 24 hours revealed a weight gain of about 25 wt.%. The hydration of black beans resulted in a weight gain after several cycles of steps a) and b) according to the present invention of more than 40 wt.% after only two minutes and of more than 60 wt.% after 4 minutes only. The benchmark of a sample of the same kind of black beans soaked for 24 hours in water showed a weight gain of about 90 wt.%.

In particular, the experimental data shows that the invention results in a significant quick weight gain in particular at the beginning of the hydration. This means according to the present invention a significant weight gain and, thus, a significant hydration effect can be reached very quickly allowing a significant acceleration of the hydration process compared to prior art approaches.

According to an embodiment of the invention, the step of pressurizing air to the first value comprises a step of keeping the first value in the first closed compartment during a predeterminable depression time.

The predeterminable depression time is preferably determined based on the kind of food to hydrate, the texture of the food, the taste of the food, the quantity of food to be hydrated, and the overall time available for hydration. The predeterminable depression time is at least 1 second long, preferably at least 10 seconds long. Depression times of 1 second to 30 minutes have been found to be applicable. Preferably, the depression time is in the range of 1 to 5 minutes as the hydration effect has been found to be most effective with depression times in this range.

According to a further embodiment the step of increasing the pressure inside the first closed compartment comprises the step of: (b21) connecting the inside of the first closed compartment with the outside of the first closed compartment. This allows an easy setup to be used with the invention as the pressure increase up to the second value in step b21) can e. g. be realized by providing and opening a valve to the outside of the first closed compartment. The connection to the outside of the first closed compartment can be established for a predetermined time, e. g. if the second value is lower than the pressure outside the first closed compartment. The connection to the outside might be kept open in particular if the second value is identical to the pressure outside the first closed compartment.

The respective valve can be operated manually. Alternatively, the valve can be controlled following a predetermined hydration timetable.

According to a further embodiment the step of immersing the food into the liquid comprises the steps of: (b11) providing and operating an elevating mechanism inside the first closed compartment for holding and immersing the food into the liquid originally contained in the first closed compartment.

The application of an elevating mechanism to immerse the food into the liquid is an easy setup for executing step b). The operation of the elevating mechanism can be manually or following a predetermined hydration timetable.

According to a further embodiment the step of increasing the pressure inside the first closed compartment comprises the steps of: (b21') providing a second closed compartment containing air and the liquid, and pressurizing the air in the second closed compartment to a third value, the third value being higher than the first value; and (b22') connecting the inside of the first closed compartment with the inside of the second closed compartment and the liquid therein, and conveying at least a part of the liquid from the second closed compartment to the first closed compartment.

The third value and, if necessary, the time during which the first and the second closed compartment are connected, is defined such that after step b22') the pressure within the first closed compartment reaches the second value. The conveying of at least a part of the liquid from the second closed compartment to the first closed compartment is in particular realized by pushing the liquid due to the higher pressure in the second closed compartment to the first closed compartment. Preferably, the first closed compartment is connected in step b22') to the part of the second closed compartment which is in step b21') filled with the liquid.

It is preferred to provide such an amount of liquid that all of the liquid is conveyed to the first closed compartment. Nevertheless, it is further possible to provide an abundance of liquid and to have only a part of this liquid conveyed from the second closed compartment to the first closed compartment.

According to a further embodiment the step of increasing the pressure inside the first closed compartment comprises the steps of: (b21') providing a second open compartment containing the liquid in at least a liquid partition, the second open compartment being opened to the outside of the first closed compartment; and (b22') connecting the inside of the first closed compartment with the liquid partition in the second open compartment, and conveying at least a part of the liquid from the second open compartment to the first closed compartment.

The liquid partition is the part of the second open compartment which is filled with the liquid. As the second open compartment is open to the outside of the first closed compartment and has, thus, ambient pressure, the conveying from the liquid partition of the second open compartment to the first closed compartment is in this embodiment driven by the lower pressure inside the first closed compartment as this first value is below the pressure outside the first closed compartment and, thus, below the pressure in the second open compartment. Therefore, the liquid is sucked from the second open compartment to the first closed compartment. According to a further embodiment the pressure difference between the third value and the first value or the pressure difference between the value of the pressure outside the first closed compartment and the first value is in the range of 70 to 100 kPa [kilopascal].

A pressure difference in the range of 70 to 100 kPa (i.e. 0.7 to 1 bar) has been found to lead to a significant quick hydration. In particular, such a pressure difference allows an effective change in the taste of the dried food allowing a quicker take-in of liquid.

According to a further embodiment the step of connecting the inside of the first closed compartment with the inside of the second closed compartment and the liquid therein or the step of connecting the inside of the first closed compartment with the liquid partition of the second opened compartment comprises a step of increasing the first value to the second value over a time duration especially in the range of 0.1 to 2 seconds.

A quick and steep increase of the pressure within the first closed compartment results in an improved take-in of the liquid into the foot. Due to the steep increase of the pressure within the first closed compartment further changes on or of the surface of the food, e.g. of the taste of the food are effectuated that facilitate the take-in of water into the food. In embodiments, the use of the terms "steps" may not exclude that in between step also other steps may be applied.

According to a further aspect of the present invention a device for hydrating food is proposed, comprising: (i) a first closed compartment for containing air and the food to be hydrated in a liquid comprising water; (ii) a first system for pressurizing the air in the first closed compartment to a first value, the first value being lower than the value of the pressure outside the first closed compartment; and (iii) a second system for immersing the food into the liquid in the first closed compartment and increasing the pressure inside the first closed compartment from the first value to a second value.

The device according to the present invention is preferably adapted and determined to perform the method according to the present invention. The first system preferably includes a source of underpressure or can be connected to a source of underpressure for reducing the pressure within the first closed compartment to the first value. The second system preferably includes a pressure reservoir of pressure being higher than the first value or can be connected to a reservoir of pressure being higher than the first value. This can e.g. be the surroundings of the first closed compartment having an ambient pressure above the first value. The source of underpressure or overpressure and the pressure reservoir can be connected to other compartments, like e.g. a second open compartment or a second closed compartment as well to pressurize this compartment to a required value.

The first closed compartment is sealable from its environment e.g. by providing respective seals. The first and second system both comprise at least one valve that allows to adapt the pressure within the first closed compartment and to seal the first closed compartment from its surroundings after the pressure within this first closed compartment has been set to the first value or second value. The first and second system can share the same valve. The at least one valve can be operated manually or automatically following a predetermined hydration timetable which can e.g. be predetermined based on the kind of food to hydrate, the amount of food to be hydrated and/or the available time to hydrate the food.

According to an improvement the liquid is originally contained in the first closed compartment; the second system comprises an elevating mechanism inside the first closed compartment for holding and immersing the food into the liquid; the second system further comprises a first valve for connecting the inside of the first closed compartment with the outside of the first closed compartment.

This means the first closed compartment is designed to be provided with the liquid before the first closed compartment is pressurized, e. g. according to step a) or B) as discussed above e. g. by providing a liquid partition in which liquid can be provided. The elevating mechanism is e.g. a mechanically operable apparatus by which the food can be raised and lowered with respect to the liquid partition.

According to a further embodiment the second system comprises a second closed compartment containing air and the liquid, having a liquid partition for providing the liquid and the air in the second closed compartment is pressurized to a third value being higher than the first value; the second system further comprises a second valve for connecting the inside of the first closed compartment with the liquid partition of the second closed compartment and the liquid therein.

This means that the second closed compartment may be adapted to provide beside air the liquid as well, e.g. by providing a liquid partition for providing a reservoir of the liquid within the second closed compartment. The second closed compartment is equipped such that it can be pressurized to a third value being higher than the first value. This third value can be lower than the ambient pressure outside the second closed compartment or higher than this ambient pressure. The liquid partition e.g. can be the lower partition of the second closed compartment. It can be separated from the remainder of the second closed compartment by dividers, e.g. by walls. It is preferred that the liquid partition is a partition of the second closed compartment, e.g. the lower part of the second closed compartment without having further dividers. Preferably, the second valve is provided at the lowermost point of the liquid partition allowing conveying the liquid from the second closed compartment to the first closed compartment independent of the amount of liquid provided in the liquid partition i.e. independent of the fluid level in the liquid partition.

This embodiment allows to convey the liquid from the second closed partition to the first closed partition by pressurizing the air in the second closed compartment to the third value being higher than the first value and by then opening the second valve to push the liquid by the pressure difference (i.e. by the overpressure relative to the first value in the first closed compartment) from the second closed compartment to the first closed compartment,. According to a further embodiment the second system comprises a second open compartment comprising a liquid partition containing the liquid, the second open compartment being open to the outside of the first closed compartment; the second system further comprises a third valve for connecting the inside of the first closed compartment with the liquid partition of the second open compartment. This embodiment may allow reducing the necessary efforts as the overpressure relative to the first value in the first closed compartment is easily provided based on the ambient pressure of the surroundings outside the first closed compartment via the second open compartment. The third valve can be actuated manually or automatically under following a predetermined hydration timetable.

According to a further embodiment the pressure difference between the third value and the first value or the pressure difference between the value of the pressure outside the first closed compartment and the first value is adapted in the range of 70 to 100 kPa. This means the device may be adapted to be controlled to create a respective pressure difference in the range of 70 to 100 kPa.

According to a further embodiment the second system is adapted to increase the pressure inside the first closed compartment from the first value to the second value over a time duration in the range of 0.1 to 2 seconds.

A quick and steep increase of the pressure within the first closed compartment results in an improved take-in of the liquid into the foot. Due to the steep increase of the pressure within the first closed compartment further changes on or of the surface of the food, e.g. of the taste of the food are effectuated that facilitate the take-in of water into the food. The short time durations can preferably be realized by utilizing valves allowing a quick operation.

According to a further aspect a kitchen appliance for preparing food is proposed, comprising a device according to the present invention, the kitchen appliance being taken among multi-cooker and cold-cooker.

The term "closed compartment" and similar terms may refer to a compartment or arrangement of a compartment that can be opened and that can be closed. The closed state may especially refer to a stage during at least part of the operation time.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1 depicts schematically an example of a device for hydrating food;
Fig. 2 depicts schematically a further example for a device for hydrating food;
Fig. 3 depicts schematically a further example for a device for hydrating food;
Fig. 4 depicts schematically a further example for a device for hydrating food; and
Fig. 5 depicts schematically an example of a kitchen appliance including a device for hydrating food.

The schematic drawings are not necessarily to scale.

### DETAILED DESCRIPTION OF THE EMBODIMENTS

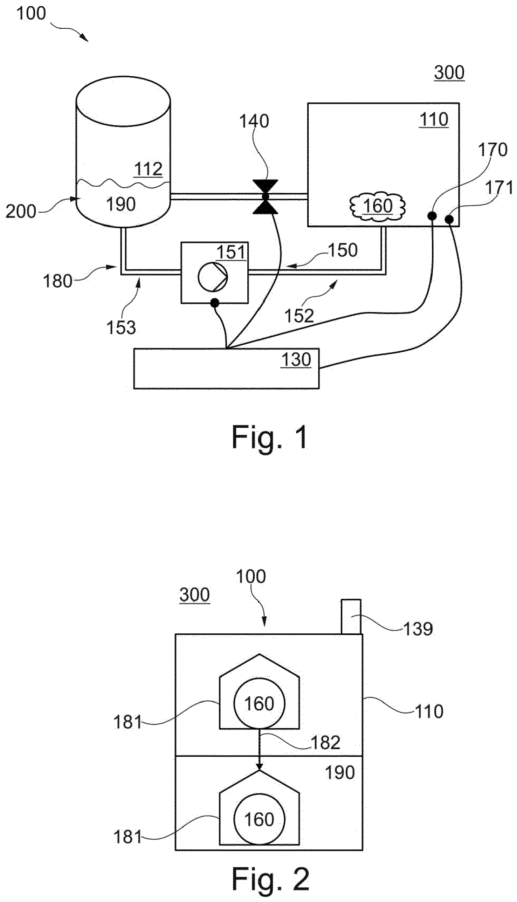

Fig. 1 schematically depicts a device 100 for hydrating food 160. The device 100 includes a first closed compartment 110 for containing air and the food 160. The food is to be hydrated in a liquid 190 comprising water. Further, the first device 100 includes a first system 150 including a vacuum pump 151 for generating an underpressure relative to the pressure of the outside 300 of the first closed compartment 110. The vacuum pump 151 is connected to the first closed compartment 110 via first vacuum tubing 152. The first closed compartment 110 is closable and sealable to the outside 300 such that a defined pressure inside the first closed compartment 110 can be generated. In use, in particular performing step a) or B) according to the present invention the inside the first closed compartment 110 is pressurized to a first value V1 via the first system 150. The pressure inside the first closed compartment 110 is monitored using a first pressure sensor 171.

The device 100 further includes a second system 180 for immersing the food 160 into the liquid and increasing the pressure inside the first closed compartment 110 from the first value V1 to a second value V2. In the present first example the second system 180 comprises a second closed compartment 112 having a liquid partition 200 being filled with the liquid 190. The second system 180 further includes the vacuum pump 151, second vacuum tubing 153 connecting the vacuum pump 151 to the second closed compartment 112. The second closed compartment 112 is sealable to the outside 300 and is use closed. In use via the second system 180 and its vacuum pump 151 the second closed compartment 112 can be pressurized such that when connecting the liquid partition 200 of the second closed compartment 112 via the second valve 140 that due to the first value V1 and the pressure in the second closed compartment 112 at least a part of the liquid 190 is conveyed from the second closed compartment 112 to the first closed compartment 110 to immerse the food 160 in the liquid 190 in the first closed compartment. Temperature sensors 170 can be arranged in the first closed compartment 110, the second closed compartment and/or the liquid partition 190 to monitor the temperature of the air in the first closed compartment 110 and/or the second closed compartment 112 and/or the liquid 190.

The second valve 140, the vacuum pump 151, the first pressure sensor 171 and the at least one temperature sensor 170 are connected to a controller 130 which controls the operation of at least one of these elements. The controller can execute a predetermined hydration timetable to accurately hydrate the food 160 in the first closed compartment 110.

Fig. 2 depicts schematically a further example of a device 100 for hydrating food 160. This device comprises a first closed compartment 110 which is closable and connectable to the outside 300 or to the vacuum pump (not shown here) via a first valve 139. The vacuum pump can be connected to the first closed compartment 110 via another opening or valve in the first closed compartment 110.

The device 100 further comprises an elevating mechanism 181 which is in this example a mechanical lift system. By this elevating mechanism 181 the food 160 can be immersed in the liquid 190 being provided in this example from the beginning in the first closed compartment. The elevating mechanism 181 is shown in two positions, one above the liquid 190 and one immersed in the liquid 190. As the arrow 182 symbolizes by operating the elevating mechanism 181 it can be moved between these two positions in the specified direction.

Via the first system including the vacuum pump (not shown here) being connected to the first valve 139 the first closed compartment 110 is in use pressurized to a first value V1 being lower than the pressure outside the first close compartment 110 with the emerging mechanism 181 in its position above the liquid 190. Thereafter, the food 160 is immersed into the liquid 190 by moving the emerging mechanism 181 into the immersed position while opening the first valve 139, thereby connecting the inside of the first closed compartment 110 to the outside 300 to increase the pressure inside the first closed compartment 110. Depending on the time in which the first valve 139 is opened to connect the inside of the first closed compartment 110 with the outside 300 the pressure within will increase until finally reaching the value V0 of the pressure outside the first closed compartment 110, therefore allowing to adjust the pressure within the first closed compartment 110 to a value between the first value V1 and the value V0 of the pressure outside the first closed compartment.

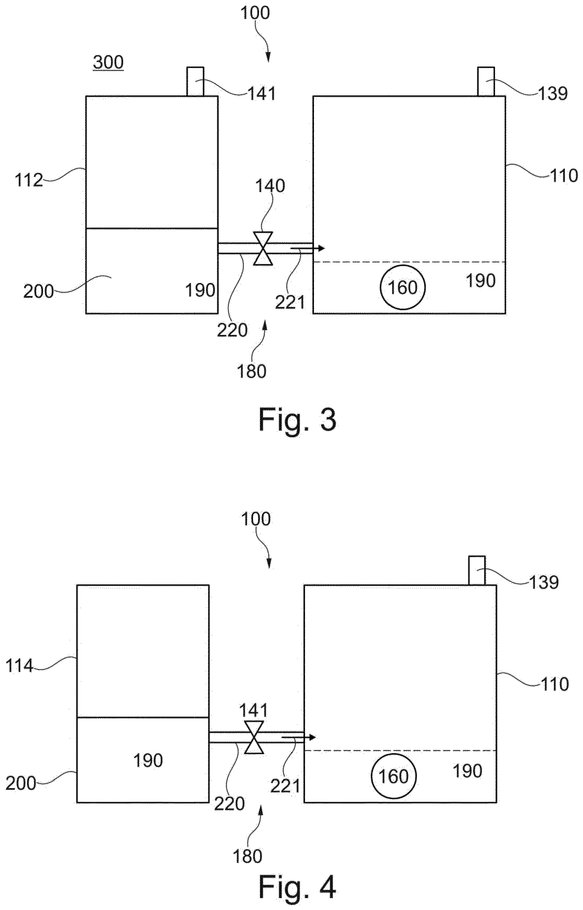

Fig. 3 depicts schematically a third example of a device 100 including the first closed compartment 110 and a second closed compartment 112 as in the first example. Both the first closed compartment 110 and the second closed compartment 112 are connectable to the outside 300 via the first valve 139 in case of the first closed compartment 110 and via a third valve 141 in the case of the first closed compartment 112 but can be sealed from the outside 300 as well to maintain a first value V1 of the pressure in the first closed compartment 110 and a third value V3 in the second closed compartment 112. Both compartments 110, 112 are pressurized using a vacuum pump (not shown) which is connectable to the compartments 110, 112. The third value V3 is higher than the first value V1. During pressurizing the compartments 110, 112 the compartments are not in fluid connection.

The second closed compartment 112 includes the liquid 190 in the liquid partition 200 of the second closed compartment 112. This liquid partition 200 is connected to the first closed compartment 110 via a connection 220 including the second valve 140. While pressurizing the first closed compartment 110 and the second closed compartment 112 to the desired pressure values the second valve 140 is closed. After the pressure in the first closed compartment 110 has reached the first value V1 and the pressure in the second closed compartment 112 has reached the third value V3 and a predetermined depression time, preferably in the range of 1 to 5 minutes, is elapsed the second valve 140 is open. Due to the higher pressure in the second closed compartment 112 the liquid 190 is at least in part pushed to the first closed compartment 110 to immerse the food 160 as is shown by the arrow 221 and the liquid 190 shown in a dashed line in the first closed compartment 110. The pressure in the first closed compartment 110 reaches the second value V2 due to the connection between the first closed compartment 110 and the second closed compartment 112.

In this example as well the first system (not shown) for pressurizing the air in the first closed compartment 110 to the first value V1 comprises a source of underpressure like a vacuum pump. The second system 180 includes beside a source of underpressure or overpressure, e.g. a vacuum pump (not shown), the second closed compartment 112, the connection 220 and the second valve 140.

Fig. 4 depicts schematically a fourth example of the device 100 for hydrating food 160. In contrast to the third example as depicted in Fig. 3 the device 100 comprises a second open compartment 114 which is not closable towards the outside 300 of the first closed compartment but which is constantly open. This means within the second open compartment 114 the pressure is always identical to the value V0 of the pressure outside the first closed compartment 110. The liquid partition 200 of the second open compartment 114 is connected to the inside of the first closed compartment 110 via a connection 220 including a third valve 141.

After the pressure within the first closed compartment 110 has been brought to the first value V1 and the predetermined depression time has elapsed the third valve 141 is opened and due to the underpressure within the first closed compartment 110 relative to the second open compartment 114 the liquid 190 is conveyed from the liquid partition 200 of the second open compartment 114 to the first closed compartment 110 to immerse the food 160 in the liquid. In this example the first system comprises a vacuum pump or another source of underpressure connectable to the first closed compartment 110 to reduce the pressure to the first value V1. The second system 180 comprises the second open compartment 114, the connection 220 and the third valve 141.

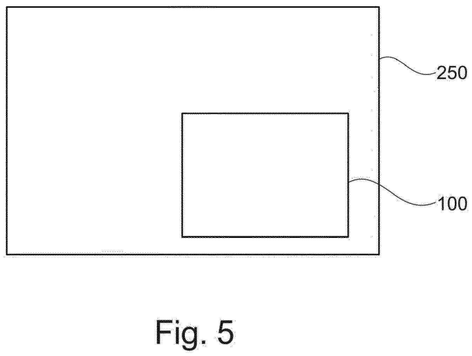

Fig. 5 very schematically depicts a kitchen appliance 250, like a multi-cooker or a cold-cooker, including a device 100 for hydrating food as discussed in this document.

This dynamic pressure can speed up the hydration to save effort and time for consumers, which can also naturally increase the water absorption of food without any mechanism damage.

The term "substantially" herein, such as in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of". The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to". The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention further applies to a device comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

### LIST OF REFERENCE SYMBOLS

- 110: first closed compartment
- 112: second closed compartment
- 114: second open compartment
- 130: controller
- 139: first valve
- 140: second valve
- 141: third valve
- 150: first system
- 151: vacuum pump
- 152: first vacuum tubing
- 160: food to be hydrated
- 170: temperature sensor
- 171: first pressure sensor
- 180: second system
- 181: elevating mechanism
- 182: arrow
- 190: liquid
- 200: liquid partition
- 220: connection
- 221: arrow
- 250: kitchen appliance
- 300: outside

- V0: value of the pressure outside the first closed compartment
- V1: first value of pressure in the first closed compartment
- V2: second value of pressure in the first closed compartment
- V3: third value of pressure in the second closed compartment

## Claims

1. A method for hydrating food (160), comprising the steps of:
a) pressurizing air to a first value (V1) in a first closed compartment (110) containing air and the food (160) to be hydrated, the first value (V1) being lower than the value (V0) of the pressure outside the first closed compartment (110); and
b) immersing the food (160) into a liquid (190) comprising water for hydrating in the first closed compartment (110) and increasing the pressure inside the first closed compartment (110) from the first value (V1) to a second value (V2).

2. The method according to claim 1, wherein the step of pressurizing air to the first value (V1) comprises a step of keeping the first value (V1) in the first closed compartment (110) during a predeterminable depression time.

3. The method according to claim 1 or 2, wherein the step of increasing the pressure inside the first closed compartment (110) comprises the step of:
b21) connecting the inside of the first closed compartment (110) with the outside of the first closed compartment (110).

4. The method according to one of the preceeding claims, wherein the step of immersing the food (160) into the liquid (190) comprises the steps of:
b11) providing and operating an elevating mechanism (181) inside the first closed compartment (110) for holding and immersing the food (160) into the liquid (190) originally contained in the first closed compartment (110).

5. The method according to claim 1 or 2, wherein the step of increasing the pressure inside the first closed compartment (110) comprises the steps of:
b21') providing a second closed compartment (112) containing air and the liquid (190), and pressurizing the air in the second closed compartment (112) to a third value (V3), the third value (V3) being higher than the first value (VI); and
b22') connecting the inside of the first closed compartment (110) with the inside of the second closed compartment (112) and the liquid (190) therein, and conveying at least a part of the liquid (190) from the second closed compartment (112) to the first closed compartment (110).

6. The method according to claim 1 or 2, wherein the step of increasing the pressure inside the first closed compartment (110) comprises the steps of:
b21') providing a second open compartment (114) containing the liquid (190) in at least a liquid partition (200), the second open compartment (114) being opened to the outside of the first closed compartment (110); and
b22') connecting the inside of the first closed compartment (110) with the liquid partition (200) of the second open compartment (114), and conveying at least a part of the liquid (190) from the second open compartment (114) to the first closed compartment (110).

7. The method according to claim 5, respectively any one of claims 1 to 4 and 6, wherein the pressure difference between the third value (V3) and the first value (V1), respectively between the value (V0) of the pressure outside the first closed compartment (110) and the first value (V1) is in the range of 70 to 100 kPa [Kilopascal].

8. The method according to claim 5, respectively claim 6, wherein the step of connecting the inside of the first closed compartment (110) with the inside of the second closed compartment (112) and the liquid (190) therein, respectively the step of connecting the inside of the first closed compartment (110) with the liquid partition (200) of the second open compartment (114) comprises a step of increasing the first value (V1) to the second value (V2) over a time duration in the range of 0.1 to 2 seconds.

9. A device (100) for hydrating food (160), comprising:
- a first closed compartment (110) for containing air and the food (160) to be hydrated in a liquid (190) comprising water;
- a first system (150) for pressurizing the air in the first closed compartment (110) to a first value (V1), the first value (V1) being lower than the value (V0) of the pressure outside the first closed compartment (110); and
- a second system (180) for immersing the food (160) into the liquid (190) in the first closed compartment (110) and increasing the pressure inside the first closed compartment (110) from the first value (V1) to a second value (V2).

10. The device (100) according to claim 9, wherein the liquid (190) is originally contained in the first closed compartment (110); the second system (180) comprises an elevating mechanism (181) inside the first closed compartment (110) for holding and immersing the food (160) into the liquid (190); the second system (180) further comprises a first valve (139) for connecting the inside of the first closed compartment (110) with the outside of the first closed compartment (110).

11. The device (100) according to claim 9, wherein the second system (180) comprises a second closed compartment (112) containing air and the liquid (190), comprising a liquid partition (200) for providing the liquid, and the air in the second closed compartment (112) is pressurized to a third value (V3) being higher than the first value (V1); the second system (180) further comprises a second valve (140) for connecting the inside of the first closed compartment (110) with the liquid partition (200) of the second closed compartment (112) and the liquid (190) therein.

12. The device (100) according to claim 9, wherein the second system (180) comprises a second open compartment (114) comprising a liquid partition (200) containing the liquid (190), the second open compartment (114) being open to the outside of the first closed compartment (110); the second system (180) further comprises a third valve (141) for connecting the inside of the first closed compartment (110) with the liquid partition (200) of the second open compartment (114).

13. The device (100) according to claim 11, respectively claim 12, wherein the pressure difference between the third value (V3) and the first value (V1), respectively between the value (V0) of the pressure outside the first closed compartment (110) and the first value (V1) is adapted in the range of 70 to 100 kPa.

14. The device (100) according to any one of claims 9 to 13, wherein the second system (180) is adapted to increase the pressure inside the first closed compartment (110) from the first value (V1) to the second value (V2) over a time duration in the range of 0.1 to 2 seconds.

15. A kitchen appliance (250) for preparing food (160), comprising a device (100) according to any of claims 9 to 14, the kitchen appliance being taken among multi-cooker and cold-cooker.
